# EUROPEAN PATENT APPLICATION

(11) **EP 4 567 608 A1**
(43) Date of publication of application: **11.06.2025**
(21) Application number: 23858820.6
(22) Date of filing: 19.06.2023
(51) Int. Cl.: G06F 11/36, G06F 16/33

(54) **CLOUD SERVICE TESTING METHOD AND RELATED DEVICE**

(30) Priority: 02.09.2022 CN 202211071573
(71) Applicant: Huawei Cloud Computing Technologies Co., Ltd., Guiyang, Guizhou 550025 (CN)
(72) Inventor: LIN, Jiadong, Guiyang, Guizhou 550025 (CN); ZHANG, Sen, Guiyang, Guizhou 550025 (CN)
(74) Representative: Goddar, Heinz J.
(86) International application number: PCT/CN2023/101070
(87) International publication number: WO 2024/045781

(57) **Abstract**

This application provides a cloud service test method, including: constructing an application programming interface API knowledge graph of a cloud service, where the API knowledge graph includes a reference relationship between an API parameter and a resource object; then identifying an API dependency relationship based on the reference relationship between an API parameter and a resource object; and then testing the cloud service based on the API dependency relationship, to obtain a test result. In the method, the API dependency relationship is identified based on the reference relationship between an API parameter and a resource object. Even if API parameter names do not match, the API dependency relationship can be accurately identified based on a same pointed resource object, thereby improving accuracy of a cloud service test. The method is universal and can meet a service requirement.

## Description

This application claims priority to Chinese Patent Application No. 202211071573.4, filed with the China National Intellectual Property Administration on September 2, 2022 and entitled "CLOUD SERVICE TEST METHOD AND RELATED DEVICE", which is incorporated herein by reference in its entirety.

### TECHNICAL FIELD

This application relates to the field of software test technologies, and in particular, to a cloud service test method and apparatus, a computing device cluster, a computer-readable storage medium, and a computer program product.

### BACKGROUND

With the development of cloud computing technologies, a software system gradually evolve from a monolithic architecture to a microservice architecture. The microservice architecture refers to that a large complex system is vertically divided into smaller subsystems based on functions or service requirements. These subsystems exist as independently deployed subprocesses (also referred to as microservices), and communicate with each other through lightweight and cross-language synchronous or asynchronous (message) network invoking. For example, the microservices may communicate with each other through representational state transfer (representational state transfer, REST) or remote procedure call (remote procedure call, RPC) such as gRPC.

A cloud service is a distributed system that includes a large quantity of microservices, for example, tens of thousands of microservices. Conventional test methods in which test designs are subjectively performed by testers are insufficient to meet such complex distributed system vulnerability tests. Currently, the industry is exploring use of intelligent fuzz testing (fuzz testing, fuzzing) to fully discover vulnerabilities of the distributed system. The fuzz testing is to input automatically or semi-automatically generated random data into a program (for example, the distributed system), and monitor a program exception, such as a crash or an assertion (assertion) failure, to find a possible program error, for example, a memory leak.

Specifically, a test tool may analyze an API dependency relationship by matching a request (request) parameter name and a response (response) parameter name in an application programming interface (application programming interface, API) definition of the cloud service, and generate an API dependency graph. For example, if a request parameter name in an API A is the same as a response parameter name in an API B, the API A depends on the API B. Then, the test tool may traverse the API dependency graph, generate an API execution sequence based on a dependency sequence, and randomly fuzz parameters in the API execution sequence, to find the vulnerabilities.

However, there is no unified standard definition for naming of the API parameters, testing performed in an API parameter name matching manner has low accuracy, and the manner cannot be universally used and therefore is difficult to meet service requirements.

### SUMMARY

This application provides a cloud service test method. In the method, an API knowledge graph is constructed, and an API dependency relationship is accurately identified based on a reference relationship between an API parameter and a resource object in the API knowledge graph, to improve accuracy of a cloud service test. The method is universal and can meet a service requirement. This application further provides a corresponding cloud service test system, computing device cluster, computer-readable storage medium, and computer program product.

According to a first aspect, this application provides a cloud service test method. The method may be executed by a cloud service test system. The cloud service test system may be a software system. The software system may be deployed in a computing device cluster. The computing device cluster executes program code of the software system, to perform the cloud service test method in this application. The cloud service test system may alternatively be a hardware system. The cloud service test method in this application is performed when the hardware system runs. In some examples, the hardware system may be a computing device cluster having a cloud service test function.

Specifically, the cloud service test system constructs an application programming interface API knowledge graph of a cloud service, identifies an API dependency relationship based on a reference relationship between an API parameter and a resource object in the API knowledge graph, and then tests the cloud service based on the API dependency relationship, to obtain a test result.

In the method, the cloud service test system identifies the API dependency relationship based on the reference relationship between an API parameter and a resource object. Even if API parameter names do not match, the API dependency relationship can be accurately identified based on a same pointed resource object, thereby improving accuracy of a cloud service test. The method is universal and can meet a service requirement.

In some possible implementations, when the reference relationship between an API parameter and a resource object represents that an API request parameter of a first API and an API response parameter of a second API point to a same resource object, the cloud service test system may determine that the first API depends on the second API.

Compared with a conventional manner of identifying an API dependency relationship based on an API parameter name, this method can resolve a problem that the API dependency relationship is not identified or is incorrectly identified due to inconsistent API parameter-naming styles, thereby improving identification precision and further improving accuracy of the cloud service test.

In some possible implementations, the cloud service test system may extract knowledge from a data source of the cloud service according to an extraction rule. For example, extraction rules of different data sources may define fields that need to be extracted from the data sources. The cloud service test system extracts field values of corresponding fields from the data sources, to extract structured knowledge. Then, the cloud service test system may construct the API knowledge graph based on the knowledge and a domain model of the cloud service.

In the method, various structured or unstructured data of the cloud service is organized in a form of the API knowledge graph, so that a relationship between API parameters can be discovered, thereby further identifying the API dependency relationship. This provides reference for generating a test case of the cloud service and further helps test the cloud service.

In some possible implementations, the cloud service test system may further present a configuration interface to a user, and then receive an address of the data source, the extraction rule, and the domain model that are configured by the user through the configuration interface. Correspondingly, the cloud service test system accesses the data source based on the address of the data source, and extracts the knowledge from the data source according to the extraction rule.

In the method, the user is supported to customize the data source, the extraction rule, or the domain model of the cloud service. In this way, API knowledge graphs of different cloud services can be constructed, API dependency relationships are identified based on the API knowledge graphs, and further, the different cloud services can be tested based on the API dependency relationships. The method is universal.

In some possible implementations, the data source includes one or more of the following: an API document, a requirement analysis library, a feature design library, a product document library, a service log library, and a test case library of the cloud service. In some examples, the data source includes at least the API document of the cloud service, and an API parameter may be defined in the API document. The cloud service test system may extract the API parameter from the API document, to construct a reference relationship between the API parameter and a resource object, thereby helping identify the API dependency relationship.

In some possible implementations, the cloud service test system may generate an API execution sequence based on the API dependency relationship, and mutate the API execution sequence, to obtain a plurality of test cases. Each of the plurality of test cases corresponds to one API execution sequence. Then, the cloud service test system may execute the plurality of test cases, to obtain test results.

In the method, the cloud service test system not only generates the API execution sequence based on the API dependency relationship, but also mutates the API execution sequence, to cover a large quantity of possible test scenarios, thereby meeting a test requirement, and ensuring a test effect.

In some possible implementations, the cloud service test system may perform interface specification analysis and parameter specification analysis based on the API knowledge graph, to obtain an interface specification analysis result and a parameter specification analysis result. Correspondingly, the cloud service test system mutates the API execution sequence based on the interface specification analysis result and the parameter specification analysis result in combination with a mutation strategy. For example, the cloud service test system may increase or decrease the API parameter by step within a parameter specification.

In the method, the API execution sequence is mutated by combining the interface specification analysis result and the parameter specification analysis result, so that a mutated API is closer to a real scenario, and an effect of the real scenario can be simulated, thereby improving reliability of the test result.

In some possible implementations, the test result includes a response result and coverage code. The cloud service test system may analyze the response result and the coverage code, to obtain an analysis result. The analysis result may include return value of the dependency relationship and return value of the mutation strategy. Specifically, the cloud service test system may calculate rareness of an obtained API execution sequence based on the response result and code coverage, to further calculate the return value of the dependency relationship and the return value of the mutation strategy.

The foregoing analysis result may be used as feedback information and fed back to an artificial intelligence (artificial intelligence, AI) model. The cloud service test system may update the API dependency relationship and the mutation strategy through the AI model based on the analysis result, where the updated API dependency relationship and the updated mutation strategy are used to generate a test case of a next round of test.

In this way, the API dependency relationship and the mutation strategy are continuously iteratively updated based on the analysis result, so that the test case can be optimized, thereby improving a test case generation effect, including reducing execution time and improving a vulnerability discovery effect.

In some possible implementations, the AI model includes a reinforcement learning model or a Bayesian model. In this way, an API execution sequence and a mutated API execution sequence can be generated through different models, to be applicable to different application scenarios, so that requirements of different services are met.

In some possible implementations, the cloud service test system may further cluster the test results of the plurality of test cases, determine a representative test case of each category, assert the representative test case based on the API knowledge graph, to obtain an assertion result, and analyze an API execution sequence of the representative test case based on a time sequence, to obtain a time sequence analysis result; then confirm, based on the assertion result and the time sequence analysis result, whether a test result of the representative test case meets an expectation; and finally, determine a baseline case from representative test cases whose test results meet the expectation.

In the method, automatic clustering, automatic assertion, and time sequence analysis are supported to automatically review the test results, so that costs of the review of the test results are reduced, and more vulnerabilities can be discovered.

In some possible implementations, the cloud service test system may be deployed in a cloud environment, the cloud service test system provides a test interface for the user, and the cloud service test system may receive a test request generated by calling the test interface by the user. Correspondingly, the cloud service test system may construct the API knowledge graph of the cloud service in response to the test request.

In the method, a unified test interface is provided for the user to test the cloud service, so that a test operation is simplified, thereby reducing test complexity.

According to a second aspect, this application provides a cloud service test system. The system includes:
an application programming interface API dependency analysis subsystem, configured to construct an API knowledge graph of a cloud service, where the API knowledge graph includes a reference relationship between an API parameter and a resource object, where
the API dependency analysis subsystem is further configured to identify an API dependency relationship based on the reference relationship between an API parameter and a resource object; and
an intelligent generation subsystem, configured to test the cloud service based on the API dependency relationship, to obtain a test result.

In some possible implementations, the API dependency analysis subsystem is specifically configured to:
when the reference relationship between an API parameter and a resource object represents that an API request parameter of a first API and an API response parameter of a second API point to a same resource object, determine that the first API depends on the second API.

In some possible implementations, the API dependency analysis subsystem is specifically configured to:
extract knowledge from a data source of the cloud service according to an extraction rule; and
construct the API knowledge graph based on the knowledge and a domain model of the cloud service.

In some possible implementations, the API dependency analysis subsystem is further configured to:
present a configuration interface to a user; and
receive an address of the data source, the extraction rule, and the domain model that are configured by the user through the configuration interface.

The API dependency analysis subsystem is specifically configured to:
access the data source based on the address of the data source, and extract the knowledge from the data source according to the extraction rule.

In some possible implementations, the data source includes one or more the following: of an API document, a requirement analysis library, a feature design library, a product document library, a service log library, and a test case library of the cloud service.

In some possible implementations, the intelligent generation subsystem is specifically configured to:
generate an API execution sequence based on the API dependency relationship, and mutate the API execution sequence, to obtain a plurality of test cases, where each of the plurality of test cases corresponds to one API execution sequence; and
execute the plurality of test cases, to obtain test results.

In some possible implementations, the API dependency analysis subsystem is further configured to:
perform interface specification analysis and parameter specification analysis based on the API knowledge graph, to obtain an interface specification analysis result and a parameter specification analysis result.

The intelligent generation subsystem is specifically configured to:
mutate the API execution sequence based on the interface specification analysis result and the parameter specification analysis result in combination with a mutation strategy.

In some possible implementations, the test result includes a response result and coverage code; and the intelligent generation subsystem is further configured to:
analyze the response result and the coverage code, to obtain an analysis result; and
update the API dependency relationship and the mutation strategy based on the analysis result using an AI model, where the updated API dependency relationship and the updated mutation strategy are used to generate a test case of a next round of test.

In some possible implementations, the AI model includes a reinforcement learning model or a Bayesian model.

In some possible implementations, the system further includes:
an intelligent review subsystem, configured to cluster the test results of the plurality of test cases, and determine a representative test case of each category; assert the representative test case based on the API knowledge graph, to obtain an assertion result, and analyze an API execution sequence of the representative test case based on a time sequence, to obtain a time sequence analysis result; and confirm, based on the assertion result and the time sequence analysis result, whether a test result of the representative test case meets an expectation; and
a test task management subsystem, configured to determine a baseline case from representative test cases whose test results meet the expectation.

According to a third aspect, this application provides a computing device cluster. The computing device cluster includes at least one computing device, and the at least one computing device includes at least one processor and at least one memory. The at least one processor and the at least one memory communicate with each other. The at least one processor is configured to execute instructions stored in the at least one memory, to enable the computing device or the computing device cluster to perform the cloud service test method according to any one of the first aspect or the implementations of the first aspect.

According to a fourth aspect, this application provides a computer-readable storage medium. The computer-readable storage medium stores instructions, where the instructions instruct a computing device or a computing device cluster to perform the cloud service test method according to any one of the first aspect or the implementations of the first aspect.

According to a fifth aspect, this application provides a computer program product including instructions. When the computer program product runs on a computing device or a computing device cluster, the computing device or the computing device cluster is enabled to perform the cloud service test method according to any one of the first aspect or the implementations of the first aspect.

In this application, based on the implementations according to the foregoing aspects, the implementations may be further combined to provide more implementations.

### BRIEF DESCRIPTION OF DRAWINGS

To describe the technical methods in embodiments of this application more clearly, the following briefly describes the accompanying drawings used in embodiments.
FIG. 1 is a diagram of an architecture of a cloud service test system according to an embodiment of this application;
FIG. 2 is an interaction flowchart of a cloud service test method according to an embodiment of this application;
FIG. 3 is an interface diagram of a configuration interface according to an embodiment of this application;
FIG. 4 is a diagram of a parameter specification according to an embodiment of this application;
FIG. 5 is a schematic flowchart of intelligently generating a test case sequence according to an embodiment of this application;
FIG. 6 is a diagram of a structure of hardware of a computing device according to an embodiment of this application;
FIG. 7 is a diagram of a structure of hardware of a computing device cluster according to an embodiment of this application;
FIG. 8 is a diagram of a structure of hardware of a computing device cluster according to an embodiment of this application; and
FIG. 9 is a diagram of a structure of a computing device cluster according to an embodiment of this application.

### DESCRIPTION OF EMBODIMENTS

The terms "first" and "second" in embodiments of this application are merely intended for description, and shall not be understood as an indication or implication of relative importance or an implicit indication of a quantity of indicated technical features. Therefore, a feature limited by "first" or "second" may explicitly or implicitly include one or more features.

First, some technical terms in embodiments of this application are described.

A cloud service is infrastructure, a platform, or software hosted by a cloud service provider and offered to users over the Internet. Based on this, the cloud service may include the following multiple types of services: infrastructure as a service (infrastructure as a service, IaaS), platform as a service (platform as a service, PaaS), and software as a service (software as a service, SaaS). The cloud service facilitates user data flowing from a front-end client (any customer-premises equipment such as a user server, a tablet computer, a desktop, a laptop, etc.) to a system of a cloud service provider over the Internet and then return. Users may access the cloud service over an Internet connection or a virtual private network (virtual private network, VPN).

The cloud service provides APIs externally. For example, a REST API provided by the cloud service, also referred to as a RESTful API, is an API that complies with a REST architecture specification, and supports interaction with a RESTful web service. The REST API mainly features that modeling is constructed oriented to cloud resources and a standard method definition and a uniform resource identifier (uniform resource identifier, URI) style definition are provided. API and parameter definition styles cannot be standardized and unified, and a large quantity of parameters are universally unique identifiers (universally unique identifiers, UUIDs) of resource objects. The UUID points to a specific real resource object and is generated only by creating an API by invoking a corresponding resource.

The dependency relationship is specifically a dependency relationship between application programming interfaces APIs. In other words, if using of one API depends on other APIs, there is a dependency relationship among these APIs. It should be noted that one API may depend on one or more other APIs. For example, in the REST API, an API for creating a virtual machine (virtual machine), namely, a create VM interface, depends on an API for creating a virtual private cloud (virtual private cloud, VPC) and an API for creating a storage volume, namely, a create VPC interface and a create volume interface. In other words, a VPC and a volume need to be created before a virtual machine is created.

Some fuzz testing tools identify API dependency relationships by matching request parameter names and response parameter names in API definitions, to further generate API execution sequences based on the API dependency relationships, and perform fuzz testing on cloud services based on the API execution sequences. Because there is no unified standard definition for naming of REST API parameters, identifying an API dependency relationship through matching by using API parameter names has low accuracy, further resulting in low accuracy in fuzz testing. The foregoing fuzz testing method cannot be universally used, and therefore cannot meet service requirements.

In view of this, an embodiment of this application provides a cloud service test method. The method may be executed by a cloud service test system. The cloud service test system may be a software system. The software system may be deployed in a computing device cluster. The computing device cluster executes program code of the software system, to perform the cloud service test method in embodiments of this application. The cloud service test system may alternatively be a hardware system. The cloud service test method in embodiments of this application is performed when the hardware system runs. In some examples, the hardware system may be a computing device cluster having a cloud service test function.

Specifically, the cloud service test system may construct an API knowledge graph of a cloud service, where the API knowledge graph includes a reference relationship between an API parameter and a resource object, then identify an API dependency relationship based on the reference relationship between an API parameter and a resource object, and then test the cloud service based on the API dependency relationship, to obtain a test result.

In the method, the cloud service test system identifies the API dependency relationship based on the reference relationship between an API parameter and a resource object. Even if API parameter names do not match, the API dependency relationship can be accurately identified based on a same pointed resource object, thereby improving accuracy of a cloud service test. The method is universal and can meet a service requirement.

To make the technical solutions of this application clearer and easier to understand, the following describes a system architecture of a cloud service test system in an embodiment of this application with reference to the accompanying drawings.

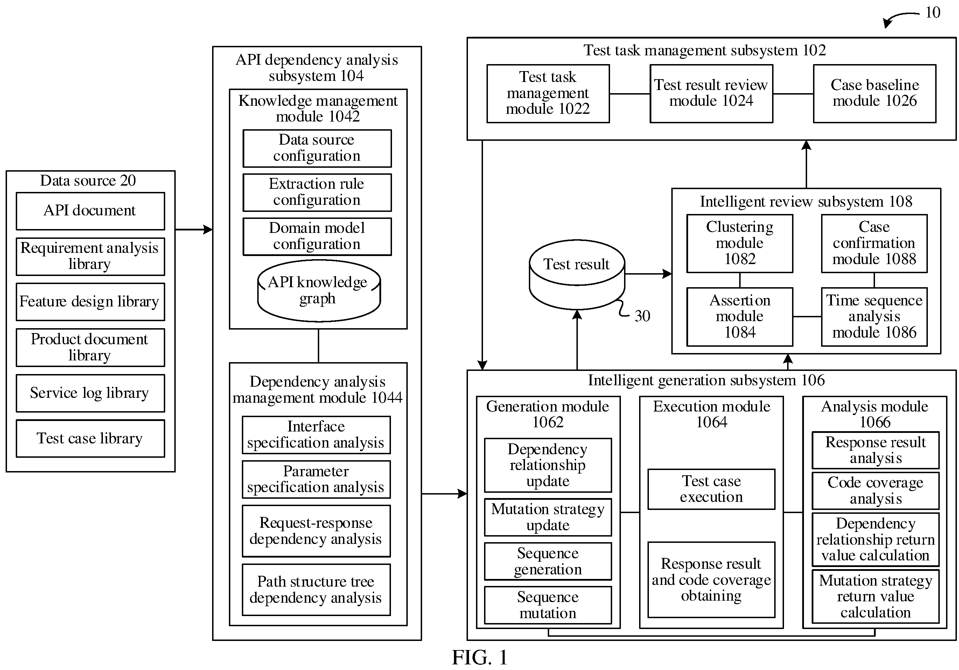

Refer to a diagram of an architecture of a cloud service test system shown in FIG. 1. The cloud service test system 10 is connected to a data source 20 and a test result database 30 of a cloud service. The data source 20 provides data used for a cloud service test. The data source 20 includes one or more of the following: an API document, a requirement analysis library, a feature design library, a product document library, a service log library, and a test case library of the cloud service. In some embodiments, the data source 20 includes at least the API document. The test result database 30 is configured to store a test result of the cloud service by the cloud service test system 10. The test result includes an execution result of a test case. The test result database 30 may further store a generated test case and code coverage information (such as a code coverage rate and coverage code) of the test case.

The cloud service test system 10 includes a test task management subsystem 102, an API dependency analysis subsystem 104, an intelligent generation subsystem 106, and an intelligent review subsystem 108. The following describes functions and structures of the subsystems.

The test task management subsystem 102 is responsible for managing an entire test process. The test task management subsystem 102 includes a test task management module 1022. The test task management module 1022 is configured to generate a test task. Further, the test task management subsystem 102 further includes a test result review module 1024. The test result review module 1024 is configured to provide a review interface, to support a user in reviewing the test result through the review interface. The test task management subsystem 102 may further include a case baseline module 1026, configured to baseline the test case, to generate a baseline case. The baseline case is a common and reusable test case. The baseline case may be used in a regression test scenario and the like.

The API dependency analysis subsystem 104 includes a knowledge management module 1042 and a dependency analysis management module 1044. The API knowledge management module 1042 is configured to construct an API knowledge graph of a cloud service, where the API knowledge graph includes a reference relationship between an API parameter and a resource object. Specifically, the API knowledge management module 1042 supports the user in configuring an address of the data source, an extraction rule, and a domain model through a configuration interface, extracting, according to the extraction rule, knowledge from the data source corresponding to the address, and constructing the API knowledge graph based on the extracted knowledge and the domain model of the cloud service. The dependency analysis management module 1044 is configured to identify an API dependency relationship based on the reference relationship between an API parameter and a resource object in the API knowledge graph. For example, when the reference relationship between an API parameter and a resource object represents that an API request parameter of a first API and an API response parameter of a second API point to a same resource object, it is determined that the first API depends on the second API.

In some embodiments, the dependency analysis management module 1044 is further configured to perform interface specification analysis and parameter specification analysis based on the API knowledge graph, to obtain an interface specification analysis result and a parameter specification analysis result. The interface specification analysis result and the parameter specification analysis result are used to provide reference for mutation of an API execution sequence.

The intelligent generation subsystem 106 is responsible for generating and executing the test case, to obtain a test result. Specifically, the intelligent generation subsystem 106 includes a generation module 1062 (also referred to as a generation engine) and an execution module 1064 (also referred to as an execution engine). The generation module 1062 is configured to generate the test case based on the API dependency relationship. For example, the generation module 1062 generates the API execution sequence based on the API dependency relationship, and mutates the API execution sequence with reference to a mutation strategy, including mutating one or more of an API execution sequence, an API parameter, and an API structure (oracle) in the API execution sequence, to obtain a plurality of test cases. Each of the plurality of test cases corresponds to one API execution sequence. The execution module 1064 is configured to execute the test case, specifically, execute the API execution sequence, to obtain the test result. The test result may include an execution result of the API execution sequence, for example, a real-time response result. The real-time response result may include an API return value. Further, the test result may further include code coverage information, for example, a code coverage rate.

In some embodiments, the intelligent generation subsystem 106 may further include an analysis module 1066 (also referred to as an analysis engine), and the analysis module 1066 is configured to analyze the response result and coverage code, to obtain an analysis result. Correspondingly, the generation module 1062 may further update the API dependency relationship and the mutation strategy through an AI model such as a reinforcement learning model or a Bayesian model based on the analysis result, where the updated API dependency relationship and the updated mutation strategy are used to generate a test case of a next round of test.

The intelligent review subsystem 108 is responsible for reviewing the test result. Specifically, the intelligent review subsystem 108 may include a clustering module 1082, an assertion module 1084, a time sequence analysis module 1086, and a case confirmation module 1088. The clustering module 1082 is configured to cluster test results of the plurality of test cases, and determine a representative test case of each category. The assertion module 1084 is configured to assert the representative test case based on the API knowledge graph, to obtain an assertion result. For example, the assertion module 1084 is configured to intelligently assert a schema of the representative test case and status code in the test result. The time sequence analysis module 1086 is configured to analyze an API execution sequence of the representative test case based on a time sequence, to obtain a time sequence analysis result. The case confirmation module 1088 is configured to confirm the test result based on the assertion result and the time sequence analysis result, for example, confirm whether the test result meets an expectation. A confirmed test case may be baselined by the case baseline module 1026 in the test task management subsystem 102, to obtain a baseline case.

It should be noted that FIG. 1 shows merely a schematic division manner of the cloud service test system 10. In another possible implementation of embodiments of this application, the cloud service test system 10 may alternatively be divided in another manner. For example, the cloud service test system 10 may not include the intelligent review subsystem 108.

The following describes a deployment manner of the cloud service test system 10.

In some possible implementations, the cloud service test system 10 may be deployed in a cloud environment, and sold in a form of testing a cloud service. The cloud environment is a computing device cluster that is provided by a cloud service provider and that is configured to provide computing, storage, and a communication resource for a user. The cloud environment may include at least one cloud server, and the cloud server may be, for example, a central server. The cloud service test system 10 may be centrally deployed on a same cloud server in the cloud environment, or may be deployed on different cloud servers in a distributed manner.

In some other possible implementations, the cloud service test system 10 may alternatively be packaged into a software package, and sold in a form of the software package. After purchasing the software package, a user may deploy the software package in a data center of the user or a cloud server leased by the user. A local server in the data center or the cloud server leased by the user may execute program code of the software package, to perform the cloud service test method in embodiments of this application.

Based on the cloud service test system 10 (referred to as a test system 10 below) in embodiments of this application, an embodiment of this application further provides a cloud service test method. The following describes the cloud service test method in this embodiment of this application with reference to the accompanying drawings.

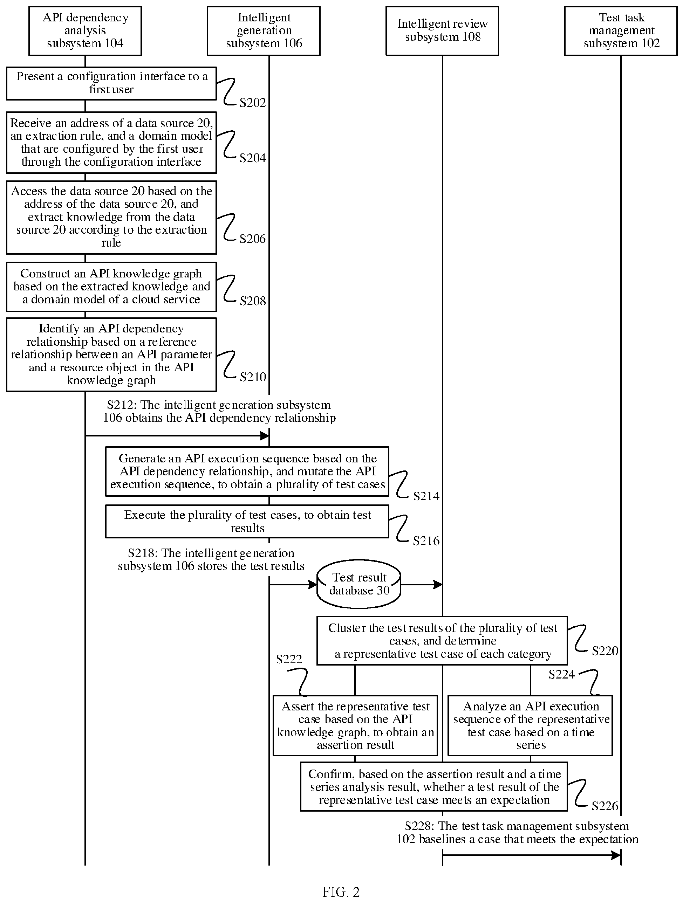

Refer to a flowchart of a cloud service test method shown in FIG. 2. The method includes the following steps.

S202: An API dependency analysis subsystem 104 presents a configuration interface to a first user.

S204: The API dependency analysis subsystem 104 receives an address of a data source 20, an extraction rule, and a domain model that are configured by the first user through the configuration interface.

The configuration interface can be a graphical user interface (Graphical User Interface, GUI) or a command user interface (command user interface, CUI). For ease of description, the following uses an example in which the configuration interface is the GUI interface for description.

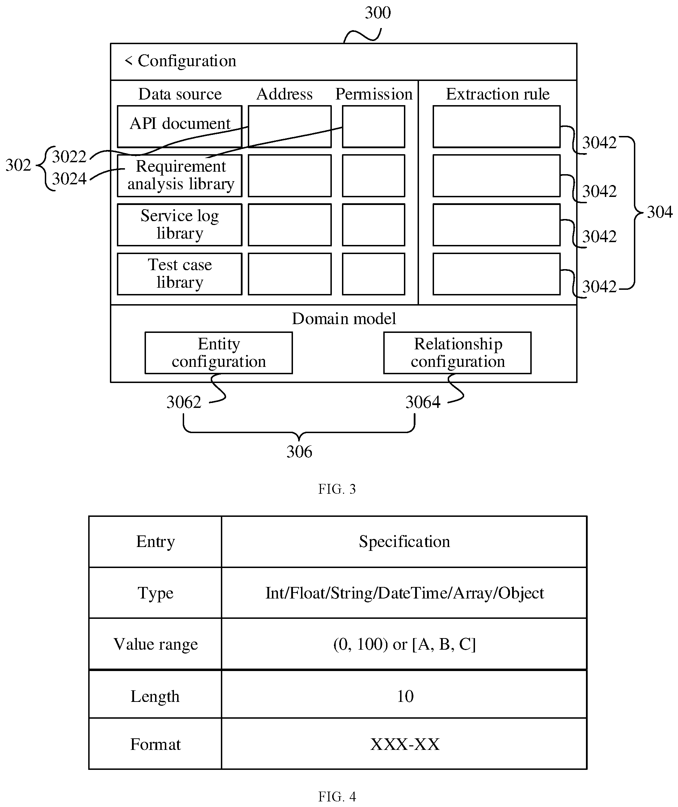

Refer to a diagram of a configuration interface shown in FIG. 3. The configuration interface 300 carries a data source configuration component 302, an extraction rule configuration component 304, and a domain model configuration component 306. The following describes the foregoing components.

The data source configuration component 302 includes an address configuration control 3022. The address configuration control 3022 supports configuration of the address of the data source 20. The data source 20 may include one or more of the following: an API document, a requirement analysis library, a feature design library, a product document library, a service log library, and a test case library of a cloud service. Addresses of the API document, the requirement analysis library, the feature design library, the product document library, the service log library, and the test case library are specifically access addresses, for example, internet protocol (Internet Protocol, IP) addresses. The data source configuration component 302 may further include a permission configuration control 3024. The permission configuration control 3024 is configured to configure an access permission of the data source 20.

The extraction rule configuration component 304 is configured to configure an extraction rule of knowledge in the data source 20. It should be noted that different extraction rules may be set for different data sources 20. The extraction rule includes a field that needs to be extracted from the data source. Further, the extraction rule may further include an API that needs to be extracted. Based on this, the extraction rule configuration component 304 may include a rule configuration control 3042. The rule configuration control 3042 supports configuration of the extraction rule of the knowledge in the data source.

The domain model configuration component 306 is configured to configure a domain model (domain model) of the cloud service. The domain model is also referred to as a service object model or a domain object model, may be considered as a conceptual model of a system, and is used to describe entities in the system and a relationship therebetween in a visualized manner. The domain model records a key concept and vocabulary of a system, shows a relationship between main entities in the system, and determines important methods and attributes of the entities. Therefore, the domain model provides a structured view of an entire system, corresponding to a dynamic view described by a case. For example, the domain model of the cloud service may include the following entities: an API, an API parameter, and an API structure. The API parameter in the domain model may be a formal parameter, to be specific, a parameter named when a function or a process is defined. The domain model of the cloud service may further include the relationship between the foregoing entities. Based on this, the domain model configuration component 306 may include an entity configuration control 3062 and a relationship configuration control 3064. The domain model configuration control 3062 supports configuration of the entities in the domain model, and the relationship configuration control 3064 is configured to configure a relationship between the entities.

When a cloud service test is performed, the first user (for example, an operation and maintenance engineer) may configure the address of the data source 20, the extraction rule, and the domain model through the controls carried on the configuration interface 300, and the API dependency analysis subsystem 104 may receive the address of the data source 20, the extraction rule, and the domain model.

S206: The API dependency analysis subsystem 104 accesses the data source 20 based on the address of the data source 20, and extracts the knowledge from the data source 20 according to the extraction rule.

The data source 20 includes unstructured data, for example, an API document, a product document in a product document library, and a run log in a service log library. The API dependency analysis subsystem 104 may access a corresponding data source 20 based on an address of the data source 20, for example, access the API document, the product document library, or the service log library, and then extract knowledge from the data source 20 according to an extraction rule corresponding to the data source 20. For example, the API dependency analysis subsystem 104 may extract an API name, an API parameter name, and an API structure from the API document, and extract an API name, an API parameter (an actual parameter), and a UUID of a resource object pointed to by the API parameter from the run log. The knowledge may usually be structured data.

S208: The API dependency analysis subsystem 104 constructs an API knowledge graph based on the extracted knowledge and the domain model of the cloud service.

The knowledge graph (knowledge graph, KG) is a structured semantic knowledge base, and is used to quickly describe concepts of various things and relationships between the things. The knowledge graph is represented as a triplet structure of "entity-relationship-entity", and aggregates a large amount of knowledge, to further implement quick knowledge reasoning and response.

Specifically, the API dependency analysis subsystem 104 may inject the extracted knowledge into the domain model of the cloud service, to construct the API knowledge graph. For example, the domain model includes a formal parameter of the API, and the API dependency analysis subsystem 104 may add an actual parameter of the API and a UUID of a resource object pointed to by the actual parameter, to construct the knowledge graph.

S202 to S208 are some specific implementations of constructing the API knowledge graph of the cloud service by the test system 10 in embodiments of this application, and the foregoing steps may not be performed when the method in this embodiment of this application is performed. For example, the API dependency analysis subsystem 104 may extract the knowledge from the data source 20 according to a default extraction rule, and the first user does not need to additionally configure the foregoing extraction rule.

S210: The API dependency analysis subsystem 104 identifies an API dependency relationship based on a reference relationship between an API parameter and a resource object.

The API knowledge graph includes the reference relationship between an API parameter and a resource object. The reference relationship represents a resource object to which an API parameter points. When API parameters of different APIs point to a same resource object, it represents that the different APIs have a dependency relationship. For example, when the reference relationship between an API parameter and a resource object represents that an API request parameter of a first API and an API response parameter of a second API point to a same resource object, it is determined that the first API depends on the second API.

In some possible implementations, the API dependency analysis subsystem 104 may further perform interface specification analysis and parameter specification analysis based on the API knowledge graph, to obtain an interface specification analysis result and a parameter specification analysis result. A specification refers to a specified requirement and standard. An interface specification refers to a requirement and a standard that are specified for the API. A parameter specification refers to a requirement and a standard that are specified for the parameter. The interface specification analysis result may be an API interface specification obtained by the API dependency analysis subsystem 104 through analysis, and the parameter specification analysis result may be an API parameter specification obtained by the API dependency analysis subsystem 104 through analysis. The foregoing interface specification analysis result and parameter specification analysis result may provide reference for subsequent API mutation.

FIG. 4 is a diagram of some parameter specifications. When a value of an API parameter is a type, a specification may include Int, Float, String, DateTime, Array, and Object. When the value of the API parameter is a numeral or a character, the specification may be (0, 100), [A, B, C], or the like. When the value of the API parameter is a length, the specification may be 10. When the value of the API parameter is format data (such as a date), the specification may be xxx-xx.

S212: The intelligent generation subsystem 106 obtains the API dependency relationship from the API dependency analysis subsystem 104.

The API dependency analysis subsystem 104 may provide the API dependency relationship for the intelligent generation subsystem 106, so that the intelligent generation subsystem 106 performs testing based on the API dependency relationship. Similarly, when further performing interface specification analysis and parameter specification analysis based on the API knowledge graph, the API dependency analysis subsystem 104 may further provide the interface specification analysis result and the parameter specification analysis result for the intelligent generation subsystem 106.

It should be noted that S212 in the above may alternatively not be performed when the method in this embodiment of this application is performed. For example, when the API dependency analysis subsystem 104 is integrated with the intelligent generation subsystem 106, S212 does not need to be performed.

S214: The intelligent generation subsystem 106 generates an API execution sequence based on the API dependency relationship, and mutates the API execution sequence, to obtain a plurality of test cases.

Specifically, the intelligent generation subsystem 106 may construct a dependency relationship graph based on the API dependency relationship, where the dependency relationship graph may be a tree graph, and then generate the API execution sequence based on the API dependency relationship graph. For example, if an API A depends on an API B and an API C, and the API C depends on an API D and an API E, the following execution sequence {API D, API E, API C, API B, API A} or {API B, API D, API E, API C, API A} may be generated.

Further, the intelligent generation subsystem 106 may mutate the API execution sequence, to fit an exception that may occur during actual running of the APIs, thereby covering diversified test scenarios. The intelligent generation subsystem 106 may mutate the API execution sequence with reference to a mutation strategy.

The mutation strategy is a strategy for mutation of the API execution sequence. The mutation strategy may be split into two steps. In a first step, an API to be mutated is selected in the API execution sequence. In a second step, the selected API is mutated, including mutation of a structure oracle of the API and/or mutation of a parameter of the API.

Strategies for mutating the oracle include deletion of a selected node, deletion of a node that is not selected, and copy of a node. Strategies for mutating the parameter include parameter variation and parameter crossing. The parameter variation includes but is not limited to a reversal of a parameter of a bool type (true and false), an increase or a decrease of a parameter of an int type based on a step, and a bit reversal of a parameter of a string type. The parameter crossing may be an exchange of different parameters, including but not limited to an exchange of parameters of a same type and an exchange of parameters of different types.

The intelligent generation subsystem 106 may generate a plurality of test cases (also referred to as test case sequences) based on the generated API execution sequence and the mutated API execution sequence. Specifically, the intelligent generation subsystem 106 may separately fill the generated API execution sequence and the mutated API execution sequence into a test case template, to generate the plurality of test cases.

The test case (Test Case) is a description of a test task for a specific software product, and reflects a test scheme, method, technology, and strategy. The test case is a file formed by including a test objective, a test environment, input data, test steps, an expected result, and a test script. The test case is a specification of test inputs, execution conditions, and expected results, that are compiled for a special objective, to verify compliance with a specific software requirement.

Based on this, the test case may include four parts of content: a case title, a precondition, a test step, and an expected result. The case title mainly describes a specific function to be tested. The precondition refers to that the case title needs to meet the condition. The test step mainly describes an operation step of the case, and may be specifically the API execution sequence. The expected result refers to that an expected requirement (a development specification, a requirement document, or a user requirement) is met, and may be, for example, a parameter specification obtained through analysis based on the API knowledge graph.

S216: The intelligent generation subsystem 106 executes the plurality of test cases, to obtain test results.

Specifically, for any one of the plurality of test cases, the intelligent generation subsystem 106 executes corresponding API calls in sequence based on an operation step in the test case or the API execution sequence, to obtain a test result for the test case.

The test result may include a response result, for example, a real-time response result of responding to an API request. In some embodiments, the response result may be a parameter value of a response parameter of a last API. In some other embodiments, the response result may be status code representing that execution succeeds or execution fails.

Further, the test result may further include code coverage information. The code coverage information may include one or more of a code coverage rate or coverage code. The coverage code is a code segment related to functions of the cloud service for which the test case tests, and the code coverage rate may be based on a proportion of the coverage code to an entire code file.

S218: The intelligent generation subsystem 106 stores the test result into the test result database 30.

S218 is an optional step in this embodiment of this application. Alternatively, S218 may not be performed when the method in this embodiment of this application is performed. For example, the intelligent generation subsystem 106 may locally store the test result, or directly provide the test result to the intelligent review subsystem 108.

S220: The intelligent review subsystem 108 clusters the test results of the plurality of test cases, and determines a representative test case of each category.

Specifically, the intelligent review subsystem 108 clusters the test results based on response results in the test results of the plurality of test cases, to classify the test cases. Further, when performing clustering, the intelligent review subsystem 108 may further perform clustering with reference to request content and a code path, to improve accuracy of test case classification.

After the test cases are classified, the intelligent review subsystem 108 may determine a representative test case of each category from test cases of the category. It should be noted that the intelligent review subsystem 106 may randomly select a test case as a representative test case of the category, or select a test case from each category as a representative test case of the category based on a sequence. In some embodiments, the intelligent review subsystem 106 may alternatively present test cases of all the categories to a second user (for example, a developer or a tester), and then determine the representative test cases of all the categories based on selection of the second user.

S222: The intelligent review subsystem 108 asserts the representative test case based on the API knowledge graph, to obtain an assertion result.

Specifically, with reference to the API knowledge graph, the intelligent review subsystem 108 may assert a data structure such as a schema by using a return structure definition and a field value range of an API in the API knowledge graph, and assert status code based on an assertion result of the schema and whether an API dependency relationship is satisfied, to obtain the assertion result.

Assertion check is performed on a return value of the API. In addition to assertion detection for a common field, a field of another type may also be detected. Writing assertions for return fields one by one is time-consuming. A data type and a matching condition may be defined by using a template. Except for a key parameter, other fields may be asserted by using the template. A JavaScript object notation (JavaScript Object Notation, JSON) schema may perfectly meet such a requirement. By checking the JSON schema, whether a response complies with a convention (for example, whether the response complies with a specification) may be determined.

In the method, the intelligent review subsystem 108 may quickly locate an exception location of the cloud service by asserting the representative test case, to help the developer or the tester modify code.

S224: The intelligent review subsystem 108 analyzes an API execution sequence of the representative test case based on a time sequence, to obtain a time sequence analysis result.

Specifically, the intelligent review subsystem 108 may analyze the API execution sequence based on the time sequence, to obtain an execution result obtained through execution based on the time sequence, and compare the execution result with an actual test result, to determine whether the execution result of the test case is correct.

S226: The intelligent review subsystem 108 confirms, based on the assertion result and the time sequence analysis result, whether a test result of the representative test case meets an expectation.

If the assertion result complies with a convention and the time sequence analysis result represents that the execution result of the test case is correct, it indicates that the test result of the representative test case meets the expectation. If the assertion result does not comply with the convention or the time sequence analysis result represents that the execution result of the test case is incorrect, it indicates that the test result of the representative test case does not meet the expectation.

S228: The test task management subsystem 102 baselines the representative test case that meets the expectation, to obtain a baseline case.

The test task management system 102 may obtain the representative test case that meets the expectation and baseline the representative test case, to obtain the baseline case. The baseline case is a common and reusable test case, and may be reused in an entire life cycle of the cloud service. For example, when the cloud service is upgraded, the baseline case may be directly used to test the upgraded cloud service, or may be used to test the upgraded cloud service after being appropriately modified.

S220 to S228 are optional steps in this embodiment of this application, and the foregoing steps may not be performed when the method in this embodiment of this application is performed.

Based on the foregoing content description, an embodiment of this application provides a cloud service test method. In the method, an API knowledge graph is constructed, and an API dependency relationship is accurately identified based on a reference relationship between an API parameter and a resource object in the API knowledge graph, to avoid missing identification of the API dependency relationship. In this way, more comprehensive and accurate test cases can be generated for cloud service testing, thereby improving test accuracy. In addition, the method is not affected by an API parameter-naming style, and has high availability. In addition, the method resolves a problem that a vulnerability discovery rate is low because a cloud service has a large quantity of APIs, a large quantity of API dependencies, and a large dependency depth, and a case is randomly generated.

Further, the method can implement automatic clustering, automatic assertion, and review of a test result of time sequence analysis. In this way, costs of reviewing the test result can be greatly reduced, more vulnerabilities can be discovered, and an application can be productized under a requirement of fast iteration and update of the cloud service.

In the embodiment shown in FIG. 2, the intelligent generation subsystem 106 may generate the API execution sequence through an artificial intelligence (artificial intelligence, AI) model based on the API dependency relationship. The AI model may include a reinforcement learning model or a Bayesian model. The intelligent generation subsystem 106 may further continuously update the dependency relationship and the mutation strategy based on the response result and the code coverage information, to improve a test case generation effect, for example, reduce execution time and improve a vulnerability discovery effect.

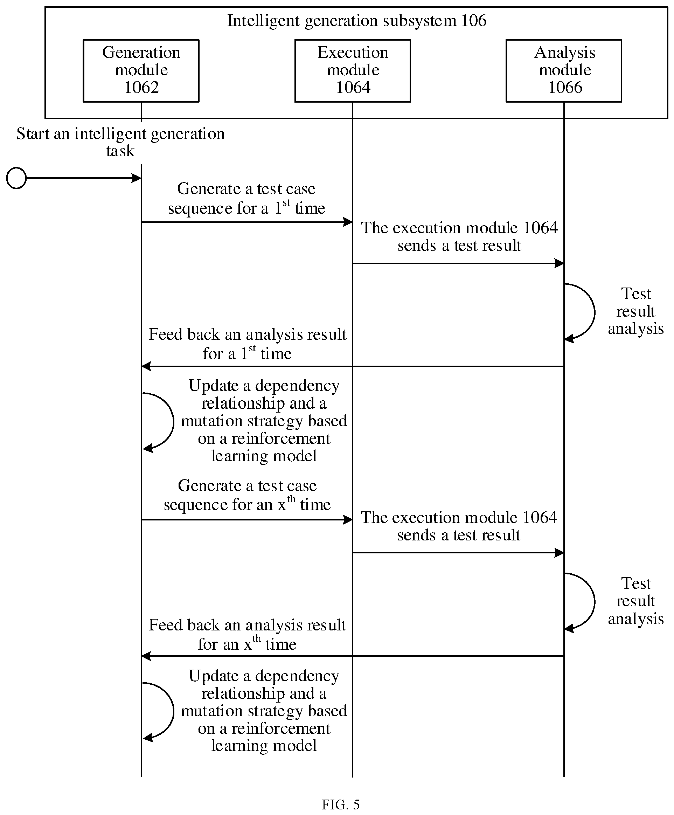

Refer to FIG. 5. A diagram of intelligently generating a test case sequence specifically includes the following steps.

Step 1: A test task management subsystem 102 starts an intelligent generation task, and inputs a task configuration, an API dependency relationship, and a mutation strategy to an intelligent generation subsystem 106.

Step 2: A generation module 1062 in the intelligent generation subsystem 106 generates an API execution sequence based on the dependency relationship and the mutation strategy, mutates the API execution sequence, to obtain a test case sequence, and then sends the test case sequence to an execution module 1064.

Step 3: The execution module 1064 executes the test case sequence, to obtain a test result, where the test result includes a response result and code coverage information.

Step 4: The analysis module 1066 analyzes the test result, to obtain an analysis result.

Specifically, the analysis module 1066 may obtain rarity of the API execution sequence based on the response result and code coverage, and then calculate return value of the dependency relationship and return value of the mutation strategy. The analysis result may include return value of the dependency relationship and return value of the mutation strategy.

Step 5: The analysis module 1066 provides the analysis result to the generation module 1062.

Step 6: The generation module 1062 updates a reinforcement learning model based on the analysis result, and updates the dependency relationship and the mutation strategy based on the reinforcement learning model.

Specifically, the reinforcement learning model may use a multi-arm slot machine model, and use the return value in the analysis result, to solve a benefit average of a dependency relationship and a mutation strategy that are used for a corresponding API execution sequence, and determine, based on a benefit average and a quantity of use times of the dependency relationship and the mutation strategy until current time, a dependency relationship and a mutation strategy that are to be used in a next round. A dependency relationship and a mutation strategy that has a larger benefit average and a smaller quantity of use times are selected more probably. In this way, exploration and utilization are better balanced, more paths are effectively covered, and efficiency is improved.

Step 7: Repeat the foregoing step 2 to step 6 until a specified quantity of execution times is reached.

It should be noted that the embodiment shown in FIG. 5 is described by using an example in which the dependency relationship and the mutation strategy are continuously updated through the reinforcement learning model. In some possible implementations, the dependency relationship and the mutation strategy may alternatively be continuously updated through a Bayesian model.

When the Bayesian model is used, the dependency relationship and the mutation strategy correspond to hyperparameters to be optimized. After API execution sequences generated based on different dependency relationships and mutation strategies are executed, code coverage of a tested cloud service also varies. An objective of using Bayesian optimization herein is to find a set of optimal hyperparameters (a dependency relationship and a mutation strategy), so that a generated API execution sequence can cover as much code as possible after being executed.

Based on this, a target function may be set as a function relationship between the hyperparameter and a code coverage rate, and is usually a black box function. Because the target function cannot be known, a Gaussian process may be used to fit the target function, and a function for fitting the target function is referred to as a substitute function. Based on distribution obtained by fitting the substitute function, data points (for example, a set of items, namely, a dependency relationship and a mutation strategy) may be sampled, so that an expectancy of the code coverage rate is the highest. In this embodiment of this application, an example in which a UCB is used as a collection function is used for description.

For example, the intelligently generating a test case sequence may include the following steps.

Step 1: The test task management subsystem 102 starts an intelligent generation task, inputs a task configuration, an API dependency relationship, and a mutation strategy to the intelligent generation subsystem 106, and inputs a set of historical hyperparameters (a dependency and a mutation strategy) and a corresponding code coverage rate as initial data.

Step 2: The generation module 1062 of the intelligent generation subsystem 106 initializes prior distribution of a substitute function based on a Gaussian process.

Step 3: The generation module 1062 samples a set of parameters, namely, a dependency relationship and a mutation strategy, based on the prior distribution of the substitute function and a sampling function, to generate an API execution sequence.

Step 4: The execution module 1064 executes a test case sequence and collects a test result, where the test result includes a response result and code coverage information (for example, a code coverage rate).

Step 5: The analysis module 1066 analyzes the response result and the code coverage rate, to obtain an analysis result.

The analysis result may be a function value of the substitute function.

Step 6: The analysis module 1066 feeds back the analysis result to the generation module 1062.

Step 7: The generation module 1062 updates the prior distribution of the substitute function based on the function value of the substitute function.

Step 8: Repeat step 3 to step 7 in the foregoing until a specified quantity of execution times is reached.

Similar to the reinforcement learning model, the Bayesian model may be used to continuously update the dependency relationship and the mutation strategy, to improve a test case generation effect, for example, reduce execution time of a test case and improve a vulnerability discovery effect.

Based on the cloud service test method in embodiments of this application, an embodiment of this application further provides a cloud service test system 10 shown in FIG. 1. The following describes the test system 10 in this embodiment of this application from a perspective of function modularization.

Refer to the diagram of the architecture of the cloud service test system shown in FIG. 1, the system 10 includes:
an API dependency analysis subsystem 104, configured to construct an API knowledge graph of a cloud service, where the API knowledge graph includes a reference relationship between an API parameter and a resource object, where
the API dependency analysis subsystem 104 is further configured to identify an API dependency relationship based on the reference relationship between an API parameter and a resource object;
an intelligent generation subsystem 106, configured to test the cloud service based on the API dependency relationship, to obtain a test result.

For example, the API dependency analysis subsystem 104 and the intelligent generation subsystem 106 may be implemented by using hardware or may be implemented by using software.

When implemented by using software, the API dependency analysis subsystem 104 may be an application program, for example, a computing engine, running on a computing device. When implemented by using hardware, the API dependency analysis subsystem 104 may include at least one computing device, for example, a server. Alternatively, the API dependency analysis subsystem 104 may be a device implemented by using an application-specific integrated circuit (application-specific integrated circuit, ASIC), a programmable logic device (programmable logic device, PLD), or the like. The PLD may be implemented by a complex programmable logical device (complex programmable logical device, CPLD), a field programmable gate array (field programmable gate array, FPGA), generic array logic (generic array logic, GAL), or any combination thereof.

Similarly, when implemented by using software, the intelligent generation subsystem 106 may be an application program, for example, a computing engine, running on a computing device. When implemented by using hardware, the intelligent generation subsystem 106 may include at least one computing device, for example, a server. Alternatively, the intelligent generation subsystem 106 may be a device implemented by using an ASIC, a PLD, or the like.

The API dependency analysis subsystem 104 may include a knowledge management module 1042 and a dependency analysis management module 1044, and the knowledge management module 1042 and the dependency analysis management module 1044 may be implemented by using software or hardware. For example, the knowledge management module 1042 and the dependency analysis management module 1044 may be an application program, for example, a computing engine, running on a computing device. For another example, the knowledge management module 1042 and the dependency analysis management module 1044 may be a computing device, for example, a server, or a device implemented by using an ASIC or a device implemented by using a PLD. The knowledge management module 1042 is configured to construct an API knowledge graph, and the dependency analysis management module 1044 is configured to identify an API dependency relationship based on a reference relationship between an API parameter and a resource object in the API knowledge graph.

In some possible implementations, the API dependency analysis subsystem 104 is specifically configured to:
when the reference relationship between an API parameter and a resource object represents that an API request parameter of a first API and an API response parameter of a second API point to a same resource object, determine that the first API depends on the second API.

In some possible implementations, the API dependency analysis subsystem 104 is specifically configured to:
extract knowledge from a data source of the cloud service according to an extraction rule; and
construct the API knowledge graph based on the knowledge and a domain model of the cloud service.

In some possible implementations, the API dependency analysis subsystem 104 is further configured to:
present a configuration interface to a user; and
receive an address of the data source, the extraction rule, and the domain model that are configured by the user through the configuration interface.

The API dependency analysis subsystem 104 is specifically configured to:
access the data source based on the address of the data source, and extract the knowledge from the data source according to the extraction rule.

In some possible implementations, the data source 20 includes one or more of the following: an API document, a requirement analysis library, a feature design library, a product document library, a service log library, and a test case library of the cloud service.

In some possible implementations, the intelligent generation subsystem 106 is specifically configured to:
generate an API execution sequence based on the API dependency relationship, and mutate the API execution sequence, to obtain a plurality of test cases, where each of the plurality of test cases corresponds to one API execution sequence; and
execute the plurality of test cases, to obtain test results.

Specifically, the intelligent generation subsystem 106 includes a generation module 1062 and an execution module 1064. The generation module 1062 and the execution module 1064 may be implemented by using software or hardware. For example, the generation module 1062 and the execution module 1064 may be an application program, for example, a computing engine, running on a computing device. For another example, the generation module 1062 and the execution module 1064 may be a computing device, for example, a server, or a device implemented by using an ASIC or a device implemented by using a PLD.

The generation module 1062 is configured to: generate an API execution sequence based on the API dependency relationship, and mutate the API execution sequence, to obtain a plurality of test cases. The execution module 1064 is configured to execute the plurality of test cases, to obtain test results.

In some possible implementations, the API dependency analysis subsystem 104 is further configured to:
perform interface specification analysis and parameter specification analysis based on the API knowledge graph, to obtain an interface specification analysis result and a parameter specification analysis result.

The intelligent generation subsystem 106 is specifically configured to:
mutate the API execution sequence based on the interface specification analysis result and the parameter specification analysis result in combination with a mutation strategy.

Specifically, the dependency analysis management module 1044 in the API dependency analysis subsystem 104 may perform interface specification analysis and parameter specification analysis based on the API knowledge graph, and provide the interface specification analysis result and the parameter specification analysis result. The generation module 1062 in the intelligent generation subsystem 106 is specifically configured to mutate the API execution sequence based on the interface specification analysis result and the parameter specification analysis result in combination with the mutation strategy.

In some possible implementations, the test result includes a response result and coverage code, and the intelligent generation subsystem 106 is further configured to:
analyze the response result and the coverage code, to obtain an analysis result; and
update the API dependency relationship and the mutation strategy based on the analysis result using an AI model, where the updated API dependency relationship and the updated mutation strategy are used to generate a test case of a next round of test.

Specifically, the intelligent generation subsystem 106 may further include an analysis module 1066. The analysis module 1066 may be implemented by using software or hardware. For example, the analysis module 1066 may be an application program, for example, a computing engine, running on a computing device. For another example, the analysis module 1066 may be a computing device, for example, a server, or a device implemented by using an ASIC or a device implemented by using a PLD. The analysis module 1066 is configured to analyze the response result and the coverage code, to obtain the analysis result. Correspondingly, the generation module 1062 may further update the API dependency relationship and the mutation strategy through the AI model based on the analysis result, where the updated API dependency relationship and the updated mutation strategy are used to generate the test case of the next round of test.

In some possible implementations, the AI model includes a reinforcement learning model or a Bayesian model.

In some possible implementations, the system 10 further includes:
an intelligent review subsystem 108, configured to cluster the test results of the plurality of test cases, and determine a representative test case of each category; assert the representative test case based on the API knowledge graph, to obtain an assertion result, and analyze an API execution sequence of the representative test case based on a time sequence, to obtain a time sequence analysis result; and confirm, based on the assertion result and the time sequence analysis result, whether a test result of the representative test case meets an expectation; and
a test task management subsystem 102, configured to determine a baseline case from representative test cases whose test results meet the expectation.

The intelligent review subsystem 108 and the test task management subsystem 102 may be implemented by using hardware or may be implemented by using software.

When implemented by using software, the intelligent review subsystem 108 and the test task management subsystem 102 may be an application program, for example, a computing engine, running on a computing device. When implemented by using hardware, the intelligent review subsystem 108 and the test task management subsystem 102 may include at least one computing device, for example, a server. Alternatively, the intelligent review subsystem 108 and the test task management subsystem 102 may be a device implemented by using an ASIC, a PLD, or the like.

Further, the intelligent review subsystem 108 may include a clustering module 1082, an assertion module 1084, a time sequence analysis module 1086, and a case confirmation module 1088, and the test task management subsystem 102 may include a case baseline module 1026. The clustering module 1082, the assertion module 1084, the time sequence analysis module 1086, the case confirmation module 1088, and the case baseline module 1026 may be implemented by using software or hardware.

For example, the clustering module 1082, the assertion module 1084, the time sequence analysis module 1086, the case confirmation module 1088, and the case baseline module 1026 may be an application program, for example, a computing engine, running on a computing device. For another example, the clustering module 1082, the assertion module 1084, the time sequence analysis module 1086, the case confirmation module 1088, and the case baseline module 1026 may each be a computing device, for example, a server, or a device implemented by using an ASIC, a PLD, or the like.

The clustering module 1082 is configured to cluster the test results of the plurality of test cases, and determine a representative test case of each category. The assertion module 1084 is configured to assert the representative test case based on the API knowledge graph, to obtain an assertion result. The time sequence analysis module 1086 analyzes an API execution sequence of the representative test case based on a time sequence, to obtain a time sequence analysis result. The case confirmation module 1088 is configured to confirm, based on the assertion result and the time sequence analysis result, whether a test result of the representative test case meets an expectation. The case baseline module 1026 is configured to determine a baseline case from representative test cases whose test results meet the expectation.

It should be noted that the test task management subsystem 102 may further include a test task management submodule 1022 and a test result review submodule 1024. The test task management submodule 1022 and the test result review submodule 1024 may be implemented by using software or hardware. The test task management submodule 1022 is configured to generate a test task. The test result review module 1024 is configured to provide a review interface, to support a user in reviewing the test result through the review interface. Review accuracy can be ensured by combining intelligent review and manual review.

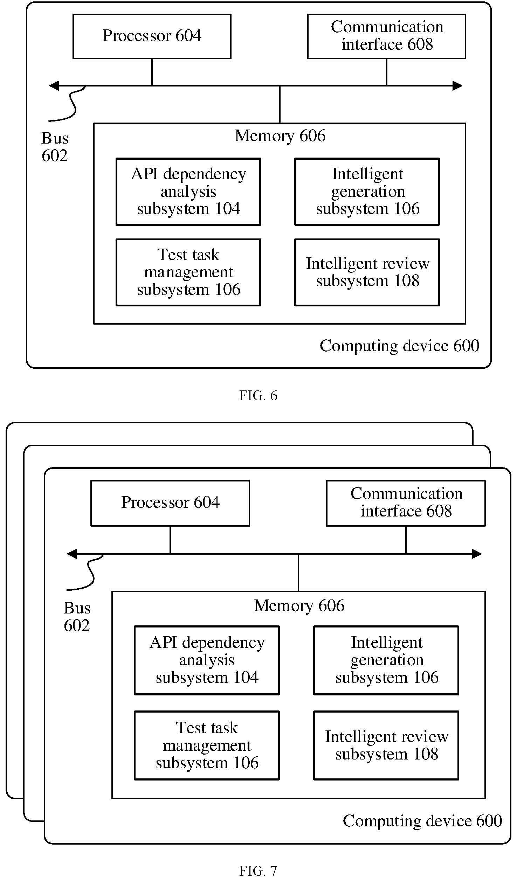

This application further provides a computing device 600. As shown in FIG. 6, the computing device 600 includes a bus 602, a processor 604, a memory 606, and a communication interface 608. The processor 604, the memory 606, and the communication interface 608 communicate with each other through the bus 602. The computing device 600 may be a server or a terminal device. It should be understood that quantities of processors and memories in the computing device 600 are not limited in this application.

The bus 602 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 6, but this does not mean that there is only one bus or only one type of bus. The bus 602 may include a path for transmitting information between components (for example, the memory 606, the processor 604, and the communication interface 608) of the computing device 600.

The processor 604 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 606 may include a volatile memory (volatile memory), for example, a random access memory (random access memory, RAM). The memory 606 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 606 stores executable program code, and the processor 604 executes the executable program code, to implement the foregoing cloud service test method. Specifically, the memory 606 stores instructions used by a cloud service test system 10 to perform the cloud service test method.

The communication interface 608 uses a transceiver module, for example, but not limited to, a network interface card or a transceiver, to implement communication between the computing device 600 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 7, the computing device cluster includes at least one computing device 600. A memory 606 in one or more computing devices 600 in the computing device cluster may store same instructions used by a cloud service test system 10 to perform a cloud service test method.

In some possible implementations, the one or more computing devices 600 in the computing device cluster may alternatively be configured to execute some instructions used by the cloud service test system 10 to perform the cloud service test method. In other words, a combination of the one or more computing devices 600 may jointly execute the instructions used by the cloud service test system 10 to perform the cloud service test method.

It should be noted that memories 606 of different computing devices 600 in the computing device cluster may store different instructions, to execute some functions of the cloud service test system 10.

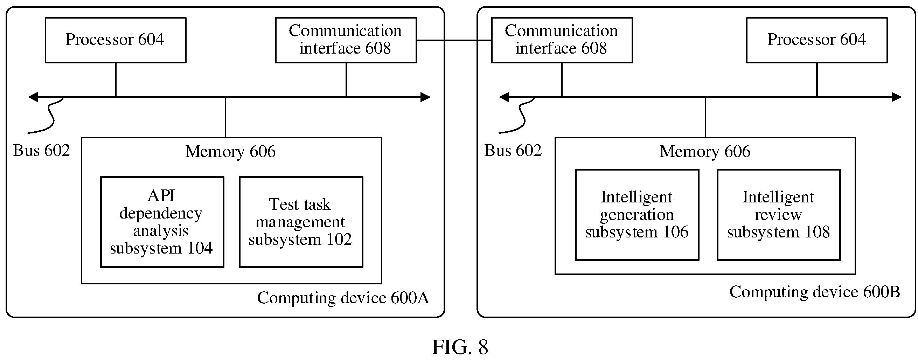

FIG. 8 shows a possible implementation. As shown in FIG. 8, two computing devices 600A and 600B are connected through a communication interface 608. A memory in the computing device 600A stores instructions used to execute a function of an API dependency analysis subsystem 104. A memory in the computing device 600B stores instructions used to execute a function of an intelligent generation subsystem 106. Further, the memory in the computing device 600A may further store instructions used to execute a function of a test task management subsystem 102, and the memory in the computing device 600B may further store instructions used to execute a function of an intelligent review subsystem 108. In other words, memories 606 of the computing devices 600A and 600B jointly store instructions used by a cloud service test system 10 to execute a cloud service test method.

For a connection manner between computing device clusters shown in FIG. 8, it may be considered that a test case sequence needs to be intelligently generated by using a large amount of computing power in the cloud service test method provided in this application, and a test result of a test case in the test case sequence is intelligently reviewed. Therefore, it is considered that functions implemented by the intelligent generation subsystem 106 and the intelligent review subsystem 108 are executed by the computing device 600B.

It should be understood that functions of the computing device 600A shown in FIG. 8 may alternatively be completed by a plurality of computing devices 600. Similarly, functions of the computing device 600B may alternatively be implemented by a plurality of computing devices 600.

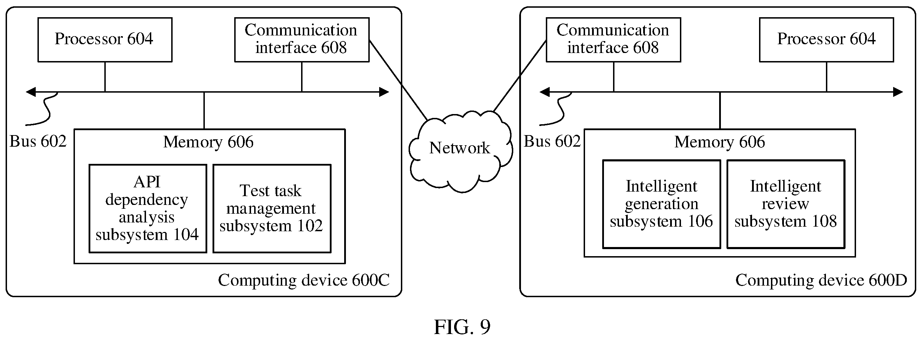

In some possible implementations, one or more computing devices in the computing device cluster may be connected through a network. The network may be a wide area network, a local area network, or the like. FIG. 9 shows a possible implementation. As shown in FIG. 9, two computing devices 600C and 600D are connected through a network. Specifically, each of the computing devices is connected to the network through a communication interface of the computing device. In this type of possible implementation, a memory 606 in the computing device 600C stores instructions used to execute a function of an API dependency analysis subsystem 104. In addition, a memory 606 in the computing device 600D stores instructions used to execute a function of an intelligent generation subsystem 106. Further, the memory in the computing device 600C may further store instructions used to execute a function of a test task management subsystem 102, and the memory in the computing device 600D may further store instructions used to execute a function of an intelligent review subsystem 108.

For a connection manner between computing device clusters shown in FIG. 9, it may be considered that a test case sequence needs to be intelligently generated by using a large amount of computing power in the cloud service test method provided in this application, and a test result of a test case in the test case sequence is intelligently reviewed. Therefore, it is considered that functions implemented by the intelligent generation subsystem 106 and the intelligent review subsystem 108 are executed by the computing device 600D.

It should be understood that functions of the computing device 600C shown in FIG. 9 may alternatively be completed by a plurality of computing devices 600. Similarly, functions of the computing device 600D may alternatively be implemented by a plurality of computing devices 600.

Embodiments of this application further provide a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, where the instructions instruct a computing device 600 to perform a cloud service test method performed by the foregoing test system 10 applied to a cloud service.

An embodiment of this application further provides a computer program product including instructions. The computer program product may be software or a program product that includes instructions and that can run on a computing device 600 or be stored in any usable medium. When the computer program product is run on at least one computing device 600, the at least one computing device 600 is enabled to perform the foregoing cloud service test method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present invention.

## Claims

1. A cloud service test method, wherein the method comprises:
constructing an application programming interface API knowledge graph of a cloud service, wherein the API knowledge graph comprises a reference relationship between an API parameter and a resource object;
identifying an API dependency relationship based on the reference relationship between an API parameter and a resource object; and
testing the cloud service based on the API dependency relationship, to obtain a test result.

2. The method according to claim 1, wherein the identifying an API dependency relationship based on the reference relationship between an API parameter and a resource object comprises:
when the reference relationship between an API parameter and a resource object represents that an API request parameter of a first API and an API response parameter of a second API point to a same resource object, determining that the first API depends on the second API.

3. The method according to claim 1 or 2, wherein the constructing an application programming interface API knowledge graph of a cloud service comprises:
extracting knowledge from a data source of the cloud service according to an extraction rule; and
constructing the API knowledge graph based on the knowledge and a domain model of the cloud service.

4. The method according to claim 3, wherein the method further comprises:
presenting a configuration interface to a user; and
receiving an address of the data source, the extraction rule, and the domain model that are configured by the user through the configuration interface; and
the extracting knowledge from a data source of the cloud service according to an extraction rule comprises:
accessing the data source based on the address of the data source, and extracting the knowledge from the data source according to the extraction rule.

5. The method according to claim 3 or 4, wherein the data source comprises one or more of the following: an API document, a requirement analysis library, a feature design library, a product document library, a service log library, and a test case library of the cloud service.

6. The method according to any one of claims 1 to 5, wherein the testing the cloud service based on the API dependency relationship, to obtain a test result comprises:
generating an API execution sequence based on the API dependency relationship, and mutating the API execution sequence, to obtain a plurality of test cases, wherein each of the plurality of test cases corresponds to one API execution sequence; and
executing the plurality of test cases, to obtain test results.

7. The method according to claim 6, wherein the method further comprises:
performing interface specification analysis and parameter specification analysis based on the API knowledge graph, to obtain an interface specification analysis result and a parameter specification analysis result; and
the mutating the API execution sequence comprises:
mutating the API execution sequence based on the interface specification analysis result and the parameter specification analysis result in combination with a mutation strategy.

8. The method according to claim 7, wherein the test result comprises a response result and coverage code; and the method further comprises:
analyzing the response result and the coverage code, to obtain an analysis result; and
updating the API dependency relationship and the mutation strategy based on the analysis result using an AI model, wherein the updated API dependency relationship and the updated mutation strategy are used to generate a test case of a next round of test.

9. The method according to claim 8, wherein the AI model comprises a reinforcement learning model or a Bayesian model.

10. The method according to any one of claims 6 to 9, wherein the method further comprises:
clustering the test results of the plurality of test cases, and determining a representative test case of each category;
asserting the representative test case based on the API knowledge graph, to obtain an assertion result, and analyzing an API execution sequence of the representative test case based on a time sequence, to obtain a time sequence analysis result;
confirming, based on the assertion result and the time sequence analysis result, whether a test result of the representative test case meets an expectation; and
determining a baseline case from representative test cases whose test results meet the expectation.

11. A cloud service test system, wherein the system comprises:
an application programming interface API dependency analysis subsystem, configured to construct an API knowledge graph of a cloud service, wherein the API knowledge graph comprises a reference relationship between an API parameter and a resource object, wherein
the API dependency analysis subsystem is further configured to identify an API dependency relationship based on the reference relationship between an API parameter and a resource object; and
an intelligent generation subsystem, configured to test the cloud service based on the API dependency relationship, to obtain a test result.

12. The system according to claim 11, wherein the API dependency analysis subsystem is specifically configured to:
when the reference relationship between an API parameter and a resource object represents that an API request parameter of a first API and an API response parameter of a second API point to a same resource object, determine that the first API depends on the second API.

13. The system according to claim 11 or 12, wherein the API dependency analysis subsystem is specifically configured to:
extract knowledge from a data source of the cloud service according to an extraction rule; and
construct the API knowledge graph based on the knowledge and a domain model of the cloud service.

14. The system according to claim 13, wherein the API dependency analysis subsystem is further configured to:
present a configuration interface to a user; and
receive an address of the data source, the extraction rule, and the domain model that are configured by the user through the configuration interface; and
the API dependency analysis subsystem is specifically configured to:
access the data source based on the address of the data source, and extract the knowledge from the data source according to the extraction rule.

15. The system according to claim 13 or 14, wherein the data source comprises one or more of the following: an API document, a requirement analysis library, a feature design library, a product document library, a service log library, and a test case library of the cloud service.

16. The system according to any one of claims 11 to 15, wherein the intelligent generation subsystem is specifically configured to:
generate an API execution sequence based on the API dependency relationship, and mutate the API execution sequence, to obtain a plurality of test cases, wherein each of the plurality of test cases corresponds to one API execution sequence; and
execute the plurality of test cases, to obtain test results.

17. The system according to claim 16, wherein the API dependency analysis subsystem is further configured to:
perform interface specification analysis and parameter specification analysis based on the API knowledge graph, to obtain an interface specification analysis result and a parameter specification analysis result; and
the intelligent generation subsystem is specifically configured to:
mutate the API execution sequence based on the interface specification analysis result and the parameter specification analysis result in combination with a mutation strategy.

18. The system according to claim 17, wherein the test result comprises a response result and coverage code; and the intelligent generation subsystem is further configured to:
analyze the response result and the coverage code, to obtain an analysis result; and
update the API dependency relationship and the mutation strategy based on the analysis result using an AI model, wherein the updated API dependency relationship and the updated mutation strategy are used to generate a test case of a next round of test.

19. The system according to claim 18, wherein the AI model comprises a reinforcement learning model or a Bayesian model.

20. The system according to any one of claims 16 to 19, wherein the system further comprises:
an intelligent review subsystem, configured to cluster the test results of the plurality of test cases, and determine a representative test case of each category; assert the representative test case based on the API knowledge graph, to obtain an assertion result, and analyze an API execution sequence of the representative test case based on a time sequence, to obtain a time sequence analysis result; and confirm, based on the assertion result and the time sequence analysis result, whether a test result of the representative test case meets an expectation; and
a test task management subsystem, configured to determine a baseline case from representative test cases whose test results meet the expectation.

21. A computing device cluster, wherein the computing device cluster comprises at least one computing device, the at least one computing device comprises at least one processor and at least one memory, the at least one memory stores computer-readable instructions, and the at least one processor executes the computer-readable instructions, to enable the computing device cluster to perform the method according to any one of claims 1 to 10.

22. A computer-readable storage medium, comprising computer-readable instructions, wherein the computer-readable instructions are used to implement the method according to any one of claims 1 to 10.

23. A computer program product, comprising computer-readable instructions, wherein the computer-readable instructions are used to implement the method according to any one of claims 1 to 10.
